# FASCICULE DE BREVET EUROPEEN

(11) **EP 2 921 349 B1**
(45) Date de publication et mention de la délivrance du brevet: **12.05.2021**
(21) Numéro de dépôt: 15159286.2
(22) Date de dépôt: 16.03.2015
(51) Int. Cl.: F21S 43/145, F21S 43/19, B60Q 3/74

(54) **Module lumineux comportant plusieurs sources lumineuses surfaciques**
Leuchtmodul, das mehrere Lichtquellen an der Oberfläche umfasst
Light module comprising a plurality of surface light sources

(30) Priorité: 17.03.2014 FR 1452176
(43) Date de publication de la demande: 23.09.2015
(73) Titulaire: VALEO VISION, 93012 Bobigny Cedex (FR)
(72) Inventeur: Jin, Hui, 75014 PARIS (FR)

(56) Documents cités:
- EP-A1- 1 367 675
- EP-A1- 2 487 671
- EP-A1- 2 592 331
- EP-A2- 1 612 658
- EP-A2- 2 221 531
- EP-A2- 2 500 635
- WO-A1-03/042966
- WO-A1-2010/066245
- WO-A1-2013/147010
- DE-U1-202013 105 597
- DE-U1-202013 105 597
- JP-A- 2009 048 942
- US-A1- 2014 056 020
- US-B1- 6 565 231

## Description

La présente invention a trait au domaine de l'éclairage automobile et elle concerne plus particulièrement la conception d'un module lumineux apte à éclairer l'intérieur d'un habitacle d'un véhicule automobile.

Dans le domaine de l'éclairage automobile, et notamment dans celui de l'éclairage de l'habitacle des véhicules, afin d'améliorer le style et l'esthétique de ces habitacles, il peut être intéressant d'utiliser des sources lumineuses dites surfaciques, c'est-à-dire des sources dont la surface effective d'émission de lumière présente des dimensions largement supérieures à l'épaisseur de ces sources, comme par exemple des diodes électroluminescentes organiques (OLED).

En particulier, il peut être avantageux d'essayer de disposer dans un même module lumineux plusieurs sources surfaciques de telle sorte que ces sources soient partiellement superposées de façon à augmenter la surface éclairante du module. En outre, ces sources surfaciques présentent généralement des parties non esthétiques comme des parties de connexion électrique disposées en périphérie des parties effectives d'émission de lumière. La superposition de ces sources permet alors de masquer certaines de ces parties non esthétiques. Il se pose toutefois la question du maintien de ces sources surfaciques superposées entre elles.

Il est connu de la demande FR2982213 une solution pour fixer une source lumineuse surfacique dans un module lumineux. Néanmoins, cette solution impose d'ajouter un cadre présentant une certaine épaisseur et qui entoure totalement la source lumineuse surfacique.

Or, dans le cas de plusieurs sources surfaciques superposées, il est nécessaire de minimiser l'espace séparant ces sources pour éviter à un utilisateur du véhicule d'apercevoir des pièces non esthétiques disposées derrière les sources par cet espace. Par conséquent, l'utilisation d'un cadre de fixation entourant totalement l'une des sources viendrait emplir une partie de l'espace entre cette source et la source superposée au dessus, laissant ainsi à jour les pièces non esthétiques.

Il existe donc un besoin pour réaliser un module comportant un moyen de maintien de plusieurs sources lumineuses surfaciques superposées entre elles de façon à ce que l'espace entre ces sources soit minimisé.

Le but de l'invention est notamment de répondre à ce besoin.

L'invention propose donc un module lumineux pour un véhicule automobile, comportant au moins des première et deuxième sources lumineuses surfaciques , la première source surfacique comportant une partie d'émission de lumière et une partie périphérique entourant la partie d'émission de lumière, la partie périphérique comportant au moins deux portions latérales se faisant face, le module lumineux comportant des premiers moyens de maintien et des deuxièmes moyens de maintien pour maintenir respectivement la première source surfacique et la deuxième source surfacique en position l'une par rapport à l'autre de sorte que la deuxième source surfacique recouvre au moins partiellement la première source surfacique, le module étant caractérisé en ce que les premiers moyen de maintien sont agencés pour maintenir la première source surfacique uniquement au niveau des deux portions latérales de la partie périphérique de cette source.

On comprend qu'au moins un des premiers moyens de maintien est agencé pour maintenir la première source surfacique au niveau de l'une des portions latérales à laquelle il est associé, et qu'au moins un autre des premiers moyens de maintien est agencé pour maintenir la première source surfacique au niveau de l'autre des portions latérales à laquelle il est associé. Les termes « agencé pour maintenir au niveau d'une portion latérale » doivent s'étendre pour un moyen de maintien agencé pour coopérer avec au moins une partie de ladite portion latérale.

L'invention permet donc de maintenir les première et deuxième sources lumineuses surfaciques superposées entre elles tout en laissant libre des portions avant et arrière, comprises entre les portions latérales. De cette façon, aucun organe de maintien ne venant s'insérer entre une portion arrière de la première source et une portion avant de la seconde source, il est possible de diminuer l'espace entre ces deux sources. Ceci permet d'éviter à un utilisateur du véhicule regardant le module de voir à travers cet espace.

On entend par source lumineuse surfacique une source dont la partie d'émission de lumière présente une surface d'émission de lumière dont au moins l'une des dimensions est largement supérieure à l'épaisseur de cette source. Par exemple, l'aire de la surface d'émission de lumière peut être supérieure à 1 cm², voire supérieure à 5 cm², voire supérieure à 10 cm². L'épaisseur de la source surfacique est par exemple inférieure à 2 mm, voire inférieure à 1 mm, voire inférieure à 0,5mm.

On entend par partie périphérique une partie de la source surfacique s'étend sur une partie, voire la totalité du pourtour de la source. Cette partie périphérique est une partie n'émettant aucune lumière. Par exemple, la partie périphérique peut présenter une surface périphérique adjacente et continue à la surface d'émission de lumière. Le cas échéant, la largeur de la surface périphérique est négligeable face à la largeur de la surface d'émission de lumière. Par exemple, la largeur de la surface périphérique est inférieure à 10 mm, voire inférieure à 5 mm.

Selon un exemple de réalisation, la première source surfacique comporte une partie de connexion électrique adjacente à la partie d'émission de lumière et dans lequel les premiers et deuxièmes moyens de maintien sont agencés pour que la deuxième source surfacique recouvre la première source surfacique au niveau d'une zone de recouvrement de cette première source surfacique, ladite zone de recouvrement comprenant partiellement la partie de connexion électrique.

Le cas échéant, la partie de connexion électrique de la première source surfacique comporte une surface de connexion électrique disposée sur une partie ou sur la totalité de la partie périphérique de la première source surfacique. Dans ce cas, la surface de connexion électrique forme une partie ou la totalité de ladite surface périphérique.

Avantageusement, la première source surfacique est une diode électroluminescente organique. Le cas échéant, la partie de connexion électrique est une électrode de la diode.

Si on le souhaite, la première source surfacique présente une forme polygonale, notamment quadrilatérale. Dans ce cas, les deux portions latérales peuvent être des portions comprenant chacune au moins une partie d'un côté du polygone, les deux côtés étant opposés. En variante, la première source surfacique peut présenter une forme circulaire ou ovale. Dans ce cas, les deux portions latérales peuvent être des portions comprenant un arc du cercle ou de l'ovale, les deux arcs étant opposés.

Selon l'invention, la première source surfacique comprend un premier masque agencé pour masquer une portion avant de la partie périphérique de la première source surfacique et dans lequel les premiers moyens de maintien sont agencés pour maintenir le premier masque de manière solidaire avec les portions latérales de la première source surfacique.

Selon un mode de réalisation de l'invention, l'un des premiers moyens de maintien comporte une zone de contact inférieure destinée à rentrer en contact avec une surface de contact inférieure de l'une des portions latérales et une zone de contact supérieure destinée à rentrer en contact avec une surface de contact supérieure de cette portion latérale pour maintenir la première source surfacique en position.

Si on le souhaite, les premiers moyens de maintien sont tous structurellement identiques.

Les modes de réalisation décrit ci-après pour la surface de contact supérieure et la zone de contact supérieure peuvent également s'appliquer, mais de façon non limitative, à la surface de contact inférieure et à la zone de contact inférieure.

Si on le souhaite, le premier moyen de maintien peut être agencé pour transmettre une alimentation électrique à la première source lumineuse surfacique. Le cas échéant, la connexion électrique est réalisée au moins partiellement via le contact entre la surface de contact supérieure et la zone de contact supérieure, la surface de contact supérieure formant ladite surface de connexion électrique. Dans ce cas, la zone de contact supérieure peut être métallisée.

Selon un mode de réalisation, la surface de contact supérieure s'étend sur au moins une majeure partie de ladite portion latérale.

Avantageusement, la zone de contact supérieure et la surface de contact supérieure s'étendent chacune sur une même longueur sensiblement inférieure à la longueur de ladite portion latérale.

Le cas échéant, la zone de contact supérieure et la surface de contact supérieure s'étendent chacune sur même une longueur sensiblement égale ou supérieure à la longueur entre une extrémité avant de la première source surfacique et une extrémité avant de la zone de recouvrement de la première source surfacique. Les longueurs de la zone de contact et de la surface de contact sont mesurées dans le sens de la longueur de la portion latérale.

Par exemple, la surface de contact supérieure peut s'étendre depuis ladite extrémité avant de la première source jusqu'à ladite extrémité avant de la zone de recouvrement. Dans ce cas, la portion latérale fait saillie du premier moyen de maintien au niveau de la zone de recouvrement de la première source.

En variante, la zone de contact supérieure et la surface de contact supérieure peuvent s'étendre chacune sur une même longueur sensiblement égale à celle de ladite portion latérale.

Avantageusement, la zone de contact supérieure s'étend sur une largeur égale à la largeur de la surface de contact supérieure. En variante, la zone de contact supérieure s'étend sur une largeur supérieure à la largeur de la surface de contact supérieure.

Avantageusement encore, la distance entre la zone de contact inférieure et la zone de contact supérieure du premier moyen de maintien est sensiblement égale à l'épaisseur de la première source surfacique. Le cas échéant, cette distance peut être constante tout le long du premier moyen de maintien.

Avantageusement, le premier moyen comporte en outre une zone de contact supérieure supplémentaire, notamment adjacente à la zone de contact supérieure, destinée à rentrer en contact avec une surface de contact supérieure dudit premier masque. Le cas échéant, la distance entre la zone de contact inférieure et la zone de contact supérieure supplémentaire du premier moyen de maintien au niveau de ladite portion avant est sensiblement égale à la somme de la largeur de la première source surfacique au niveau de cette portion avant et de la largeur du masque.

Selon un exemple de réalisation de l'invention, le premier moyen comporte une gorge comprenant les zones de contact inférieure et supérieure. Le cas échéant, la gorge peut être ouverte à l'une, voire aux deux de ses extrémités.

Selon un autre exemple de réalisation de l'invention, le premier moyen comporte un support comprenant la zone de contact inférieure et un rebord relié au support comprenant la zone de contact supérieure.

Selon un autre mode de réalisation de l'invention, la surface de contact supérieure est une surface locale de ladite portion latérale.

Avantageusement, le premier moyen de maintien peut comporter une pluralité de zones de contact supérieures distinctes destinées à rentrer en contact avec une pluralité de surfaces de contact supérieure locales de ladite portion latérale.

Par exemple, le premier moyen peut comporter un support comprenant la zone de contact inférieure et au moins un clip relié au support comprenant la zone de contact supérieure.

De préférence, la deuxième source surfacique comporte une partie d'émission de lumière et une partie périphérique entourant la partie d'émission de lumière, la partie périphérique comportant au moins deux portions latérales se faisant face. Dans ce cas, les deuxièmes moyens de maintien peuvent être agencés pour maintenir la deuxième source surfacique uniquement au niveau des deux portions latérales de la partie périphérique de cette source.

Avantageusement, les deuxièmes moyens de maintien peuvent être structurellement semblables aux premiers moyens de maintien.

Dans un mode de réalisation de l'invention, les premiers et deuxièmes moyens de maintien sont formés en une seule pièce. En variante, les premiers et deuxièmes moyens de maintien sont deux pièces distinctes, qui peuvent être fixées l'une à l'autre.

Par exemple, le module peut comprendre un support agencé pour supporter les première et deuxième sources surfaciques. Si on le souhaite, ce support présente un profil en gradin.

Par exemple, les premiers moyens de maintien peuvent être disposés de part et d'autre du support. Le cas échéant, les premiers moyens de maintien sont fixés au support, notamment par vissage ou encliquetage.

En variante, le premier moyen et le support sont formés en une seule pièce.

Dans un mode de réalisation de l'invention, le module est agencé en dispositif d'éclairage de l'intérieur d'un habitacle du véhicule. Dans un autre mode de réalisation de l'invention, le module est agencé en dispositif d'éclairage et/ou de signalisation d'un véhicule automobile.

D'autres caractéristiques et avantages de l'invention apparaîtront à la lecture de la description détaillée d'un mode de réalisation qui va suivre et pour la compréhension de laquelle on se reportera aux figures annexées parmi lesquelles :
- la figure 1 est une représentation schématique en perspective d'un module lumineux selon un premier mode de réalisation de l'invention ;
- les figures 2A à 2D sont des vue partielles en coupe du module lumineux de la figure 1 et d'un premier moyen de maintien de ce module ;
- les figures 3A à 3C sont des vues partielles en coupe d'un module lumineux selon un deuxième exemple ne faisant pas partie de l'invention et d'un premier moyen de maintien d'un tel module ;
- les figures 4A à 4C sont des vues partielles en coupe d'un module lumineux selon un troisième exemple ne faisant pas partie de l'invention et d'un premier moyen de maintien d'un tel module.

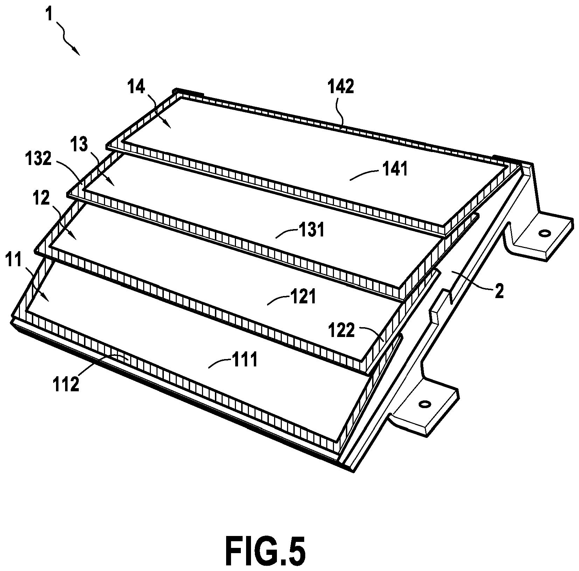

Il est en premier lieu fait référence à la figure 5, qui décrit partiellement un module lumineux 1, tel qu'un dispositif d'éclairage de l'habitacle d'un véhicule, comportant des première, deuxième, troisième et quatrième sources lumineuses surfaciques 11 à 14, telles que des diodes électroluminescentes organiques (OLED) et un support 2 agencé pour supporter ces sources.

Le support 2 présente un profil en gradin agencé de manière à ce que les sources lumineuses surfaciques 11 à 14 soient disposées entre elles de façon à ce que :
- la source 14 recouvre partiellement la source 13 ;
- la source 13 recouvre partiellement la source 12 ; et
- la source 12 recouvre partiellement la source 11.

Chaque source lumineuse surfacique 11 à 14 comporte une partie d'émission de lumière comportant une surface d'émission de lumière 111, 121, 131 et 141 et une partie périphérique 112, 122, 132 et 142 entourant la partie d'émission de lumière et s'étendant sur tout le pourtour de cette source.

Chaque source 11 à 14 présente une forme rectangulaire de sorte à ce que la partie périphérique 112, 122, 132 et 142 présente des portions avant, arrière et latérales.

La partie périphérique de chaque source lumineuse surfacique 11 à 14 est une partie de connexion électrique de cette source et comporte à cet effet une surface de connexion électrique 112, 122, 132 et 142 formant une électrode de la source adjacente à la surface d'émission de lumière 111, 121, 131 et 141.

Les sources lumineuses surfaciques 11 à 14 sont disposées sur le support de sorte à ce que chaque source recouvre la source d'en dessous au niveau d'une zone de recouvrement comprenant la portion arrière de la surface de connexion électrique 112, 122 et 132.

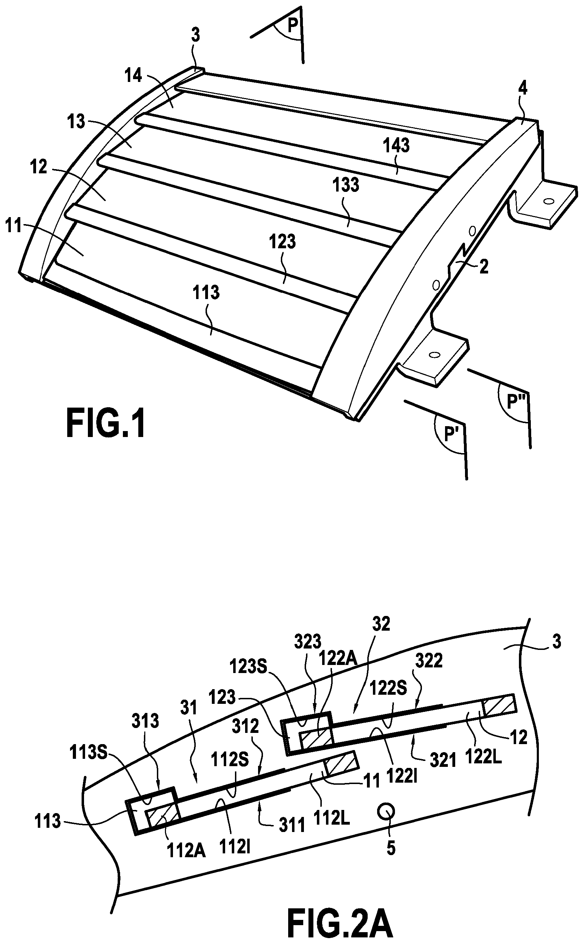

Tel qu'illustré sur la figure 1, le module 1 comporte en outre deux pièces de maintien gauche 3 et droite 4 pour maintenir les sources lumineuses surfaciques 11 à 14 entre elles dans leur position de recouvrement.

Les pièces de maintien 3 et 4 comportent chacune des premiers, deuxièmes, troisièmes et quatrièmes moyens de maintien (non représentés sur cette figure) agencés pour maintenir respectivement les première, deuxième, troisième et quatrième sources lumineuses surfaciques 11 à 14 uniquement au niveau des portions latérales de ces sources. On comprend que chaque moyen de maintien de la pièce de maintien gauche 3 est agencé pour maintenir une source surfacique au niveau de sa portion latérale gauche et que le moyen de maintien de la pièce de maintien droite 4 situé en face est agencé pour maintenir cette source surfacique au niveau de la portion latérale droite.

Chaque source surfacique 11 à 14 comprend un masque 113 à 143 agencé pour masquer une portion avant de la partie périphérique de cette source surfacique. Les moyens de maintien de cette source sont en outre agencés pour maintenir ce masque de manière solidaire avec les portions latérales de cette source surfacique.

Il apparait clairement sur la figure 1 que les portions avant et arrière des sources lumineuses 11 à 14 sont laissées libres et que de cette façon, puisque aucun organe de maintien ne vient s'insérer entre une portion arrière de la première source et une portion avant de la seconde source, il est possible de diminuer l'espace entre ces sources. Ceci permet d'éviter à un utilisateur du véhicule regardant le module de voir à travers cet espace.

Seuls les moyens de maintien gauche des première et deuxième sources lumineuses surfaciques 11 et 12 vont maintenant être décrit, étant entendu que les modes de réalisation qui vont suivre peuvent également s'appliquer, de façon non limitatives, tant aux autres moyens de maintien gauche des troisième et quatrième sources surfaciques 13 et 14 qu'aux moyens de maintien droit.

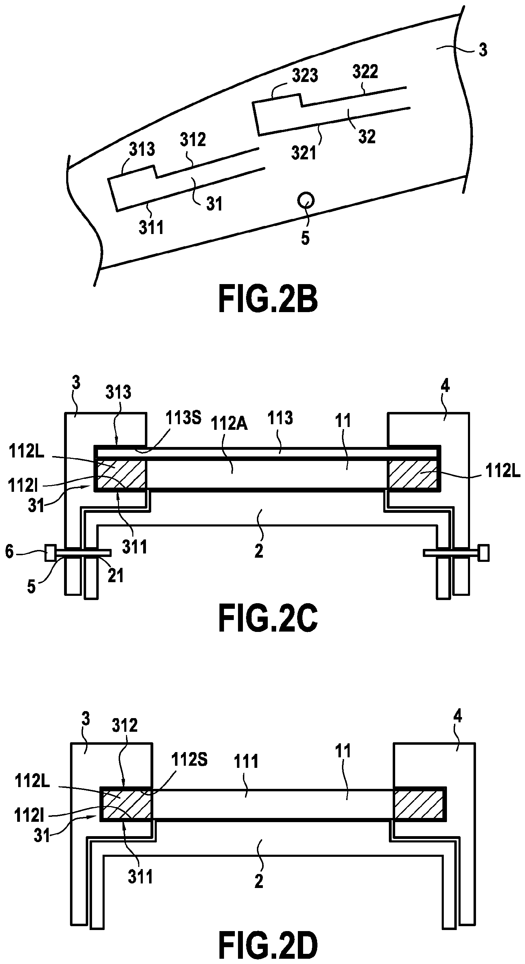

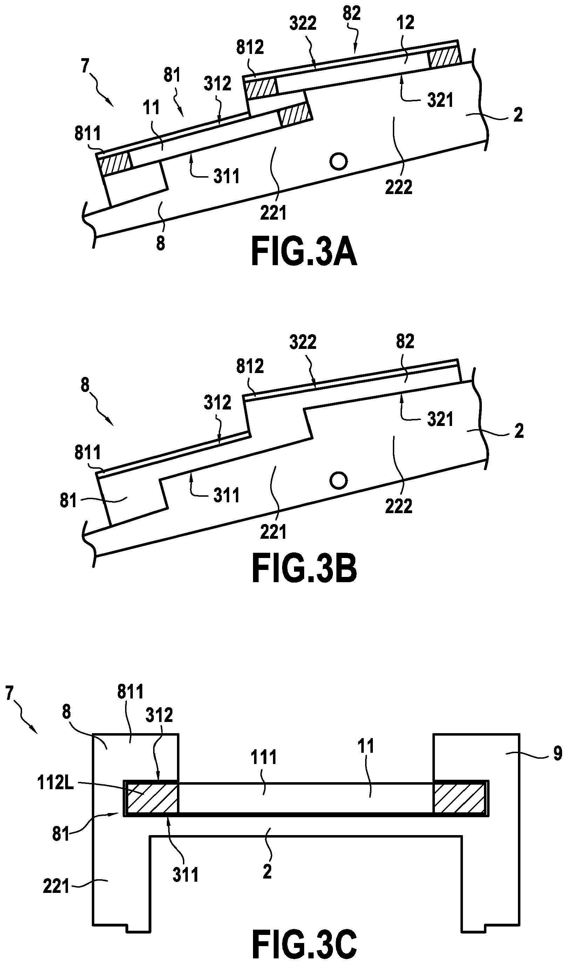

Il est maintenant fait référence aux figures 2A et 2B qui représentent respectivement - en coupe selon un plan P vertical passant par les portions latérales gauches des sources - une partie du module 1 comprenant notamment la première source lumineuse surfacique 11 et la deuxième source lumineuse surfacique 12 et une partie de la pièce de maintien 3 de la figure 1 ; ainsi qu'aux figures 3A et 3B qui représentent respectivement le module 1 en coupe selon un plan P' vertical passant par la portion avant de la première source 11 et un autre plan P" vertical passant par le milieu de la première source 11.

La pièce de maintien 3 comporte un premier moyen de maintien, sous la forme d'une gorge 31, et un deuxième moyen de maintien, sous la forme d'une gorge 32, pour maintenir respectivement la première source surfacique 11 et la deuxième source surfacique 12 en position l'une par rapport à l'autre de sorte que la deuxième source surfacique 12 recouvre au moins partiellement la première source surfacique 11.

La gorge 31 comporte une zone de contact supérieure 312 destinée à rentrer en contact avec une surface de contact supérieure 112S de la portion latérale 112L de la partie périphérique 112 de la première source surfacique 11 et une zone de contact inférieure 311 destinée à rentrer en contact avec une surface de contact inférieure 112l de cette portion latérale 112L pour maintenir la première source surfacique 11 en position.

La gorge 32 comporte une zone de contact supérieure 322 destinée à rentrer en contact avec une surface de contact supérieure 122S de la portion latérale 122L de la partie périphérique 122 de la deuxième source surfacique 12 et une zone de contact inférieure 321 destinée à rentrer en contact avec une surface de contact inférieure 122l de cette portion latérale 122L pour maintenir la deuxième source surfacique 12 en position.

Les surfaces de contact supérieures 112S et 122S et inférieure 112l et 122l s'étendent chacune sur au moins une majeure partie des portions latérales 112L et 122L.

Les surfaces de contact supérieures 112S et 122S s'étendent chacune depuis une extrémité arrière de la portion avant 112A et 122A des première et deuxième sources surfaciques 11 et 12 jusqu'à une extrémité avant des zones de recouvrement de ces sources surfaciques 11 et 12.

Les zones de contact supérieures 312 et 322 et les surfaces de contact supérieures 112S et 122S s'étendent alors chacune sur même une longueur.

Les surfaces de contact inférieures 112l et 122l s'étendent chacune depuis une extrémité avant des première et deuxième sources surfaciques 11 et 12 jusqu'à une extrémité avant des zones de recouvrement de ces sources surfaciques 11 et 12.

Les gorges 31 et 32 étant ouvertes au niveau de leur extrémité arrière, les portions latérales 112L et 122Lfont saillie de ces gorges 31 et 32 au niveau de la zone de recouvrement des sources surfaciques 11 et 12. On s'assure ainsi qu'aucun élément ne puisse s'insérer dans l'espace entre les deux sources 11 et 12.

Tel qu'illustré en figure 2C et 2D, les zones de contact inférieures 311 et 321 et supérieures 312 et 322 s'étendent sur une même largeur égale à la largeur des portions latérales 112L et 122L.

Au niveau des portions avant 112A et 122A, les zones de contact supérieures 312 et 322 sont chacune adjacente à une zone de contact inférieure supplémentaire 313 et 323 destinée à rentrer en contact avec une surface de contact supérieure 113S et 123S des masques 113 et 123. Les distances entre les zones de contact inférieures 311 et 321 et les zones de contact inférieures supplémentaires 313 et 323 au niveau des portions avant 112A et 122A sont sensiblement égales à la somme de la largeur des sources surfaciques 11 et 12 au niveau de ces portions avant et de la largeur des masques 113 et 123. Les gorges 31 et 32 maintiennent donc également les masques 113 et 123 de manière solidaire avec les sources 11 et 12.

Sur le reste des gorges 31 et 32, les distances entre les zones de contact supérieures 312 et 322 et les zones de contact inférieures 311 et 321 sont sensiblement constantes et égales à l'épaisseur des sources surfaciques 11 et 12.

La pièce de maintien 3 est formée en une seule pièce et comporte un trou 5. Le support 2 comporte également un trou 21 destiné à venir en face du trou 5, de manière à ce qu'une vis 6 puisse fixer la pièce de maintien 3 au support 2.

Les figures 3A à 3C représentent un autre exemple d'un module 7 ne faisant pas partie de

l'invention et une pièce de maintien pour un tel module dans des vues semblables aux figures 2A, 2B et 2D.

Le module 7 est en tout point semblable au module des figures 1, 2A à 2D, à l'exception des pièces de maintien. De plus, ce module est dépourvu de masque pour cacher les portions avant des sources.

Dans ce mode, les pièces de maintien 8 et 9 et le support 2 forment une même pièce.

La pièce de maintien 8 comporte le premier moyen de maintien 81 de la première source 11 et le deuxième moyen de maintien 82 de la deuxième source 12. Chaque moyen 81, 82 comporte une partie 221, 222 du support 2 comprenant la zone de contact inférieure 311, 321 et un rebord 811, 812 relié au support 2 comprenant la zone de contact supérieure 312, 322. Il est ainsi possible d'insérer chaque source lumineuse surfacique directement sur le support pour qu'elle soit maintenue dans sa position finale, sans besoin d'ajouter et de fixer une pièce supplémentaire.

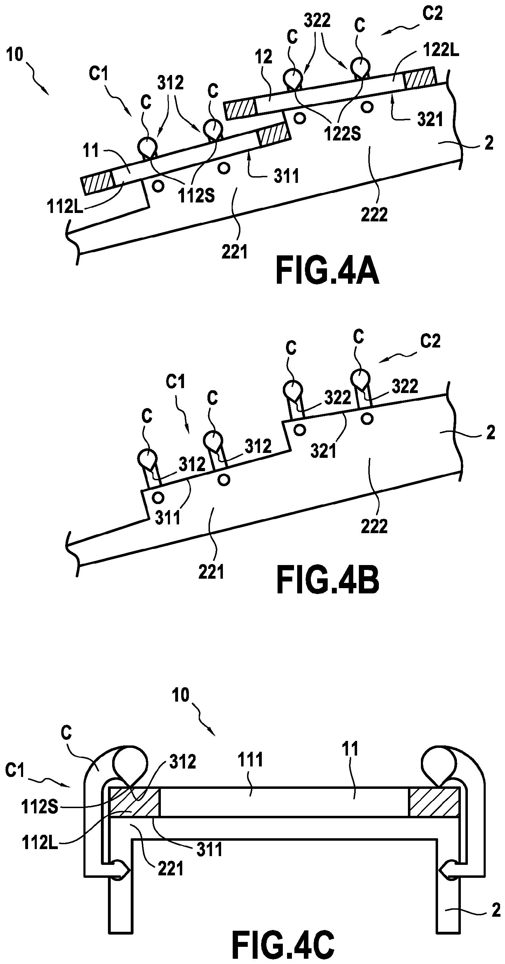

Les figures 4A à 4C représentent un troisième exemple d'un module 10 ne faisant pas partie de

l'invention et une pièce de maintien pour un tel module dans des vues semblables aux figures 2A, 2B et 2D. Le module 10 est en tout point semblable au module des figures 1, 2A à 2D, à l'exception du fait que ce module est dépourvu de masque pour cacher les portions avant des sources ou de pièce de maintien en tant que tel.

Le module 10 comporte un premier moyen de maintien C1 de la première source 11 et un deuxième moyen de maintien C2 de la deuxième source.

Chaque moyen de maintien C1, C2 comportant chacun une partie 221, 222 du support 2 comprenant la zone de contact inférieure 311, 321.

De plus, chaque moyen de maintien C1, C2 comporte une pluralité de clips C encliquetés dans le support 2 , chaque clip comportant une zone de contact inférieure 312, 322 distincte destinées à rentrer en contact avec une pluralité de surfaces de contact supérieure locales 112S, 122S des portions latérales 112L, 122L.

Bien entendu, diverses modifications peuvent être apportées par l'homme du métier aux structures du module lumineux, qui viennent d'être décrites à titre d'exemples non limitatifs.

## Revendications

1. Module lumineux (1) pour un véhicule automobile, comportant au moins des première et deuxième sources lumineuses surfaciques (11, 12, 13, 14), la première source surfacique (11) comportant :
- une partie d'émission de lumière (111) et une partie périphérique (112) entourant la partie d'émission de lumière, la partie périphérique comportant au moins deux portions latérales (112L) se faisant face,
le module lumineux comportant des premiers moyens de maintien (31) et des deuxièmes moyens de maintien (32) pour maintenir respectivement la première source surfacique (11) et la deuxième source surfacique (12) en position l'une par rapport à l'autre de sorte que la deuxième source surfacique (12) recouvre au moins partiellement la première source surfacique, (11) le module étant **caractérisé en ce que** les premiers moyens de maintien (31) sont agencés pour maintenir la première source surfacique (11) uniquement au niveau des deux portions latérales de la partie périphérique de cette source et **en ce que** le module comprend un premier masque (113) agencé pour masquer une portion avant (112A) de la partie périphérique de la première source surfacique (11) et dans lequel les premiers moyens de maintien (31) sont agencés pour maintenir le masque (113) de manière solidaire avec les portions latérales de la première source surfacique (11).

2. Module (1) selon la revendication 1, dans la première source surfacique (11) comporte une partie de connexion électrique adjacente à la partie d'émission de lumière et dans lequel les premiers et deuxièmes moyens de maintien sont agencés pour que la deuxième source surfacique (12) recouvre la première source surfacique (11) au niveau d'une zone de recouvrement de cette première source surfacique, ladite zone de recouvrement comprenant partiellement la partie de connexion électrique.

3. Module (1) selon l'une des revendications 1 à 2, dans lequel la première source surfacique (11) est une diode électroluminescente organique.

4. Module (1) selon l'une des revendications 1 à 3, dans lequel l'un des premiers moyens de maintien (31) comporte une zone de contact inférieure (311) destinée à rentrer en contact avec une surface de contact inférieure (112I) de l'une des portions latérales (112L) et une zone de contact supérieure (312) destinée à rentrer en contact avec une surface de contact supérieure (112S) de cette portion latérale pour maintenir la première source surfacique (11) en position.

5. Module (1) selon la revendication 4, dans lequel la surface de contact supérieure (112S) s'étend sur au moins une majeure partie de ladite portion latérale (112L).

6. Module (1) selon la revendication 5, dans lequel la zone de contact supérieure (312) et la surface de contact supérieure (112S) s'étendent chacune sur une même longueur sensiblement inférieure à la longueur de ladite portion latérale (112L).

7. Module (1) selon la revendication 6 en combinaison avec la revendication 2, dans lequel la zone de contact supérieure (312) et la surface de contact supérieure (112S) s'étendent chacune sur même une longueur sensiblement égale ou supérieure à la longueur entre une extrémité avant de la première source surfacique et une extrémité avant de la zone de recouvrement de la première source surfacique.

8. Module (1) selon la revendication 5, dans lequel la zone de contact supérieure (312) et la surface de contact supérieure (112S) s'étendent chacune sur une même longueur sensiblement égale à celle de ladite portion latérale (112L).

9. Module (1) selon l'une des revendications 5 à 8, dans lequel le premier moyen (31) comprend en outre une zone de contact supérieur supplémentaire (313) destinée à rentrer en contact avec une surface de contact supérieur (113S) dudit premier masque (113).

10. Module (1) selon l'une des revendications 5 à 9, dans lequel le premier moyen comporte une gorge (31) comprenant les zones de contact inférieure et supérieure (311, 312).

11. Module (1) selon l'une des revendications 5 à 9, dans lequel le premier moyen (31) comporte un support (2) comprenant la zone de contact inférieure (311) et un rebord relié au support comprenant la zone de contact supérieure (312).

12. Module (1) selon la revendication 4, dans lequel la surface de contact supérieure (112S) est une surface locale de ladite portion latérale.

13. Module (1) selon la revendication 12, dans lequel le premier moyen comporte un support comprenant la zone de contact inférieure et au moins un clip relié au support comprenant la zone de contact supérieure.

14. Module (1) selon l'une des revendications 1 à 13, le module comprenant un support (2) agencé pour supporter les première et deuxième sources surfaciques (11,12,13, 14).

15. Module (1) selon la revendication 14, dans lequel les premiers moyens de maintien (31) sont fixés au support (2), notamment par vissage ou encliquetage.

16. Module (1) selon la revendication 14, dans lequel le premier moyen (31) et le support (2) sont formés en une seule pièce.

17. Dispositif d'éclairage de l'intérieur d'un habitacle du véhicule comprenant un module (1) selon l'une des revendications précédentes.

## Patentansprüche

1. Lichtmodul (1) für ein Kraftfahrzeug, aufweisend mindestens eine erste und eine zweite flächige Lichtquelle (11, 12, 13, 14), wobei die erste flächige Quelle (11) Folgendes aufweist:
- einen Lichtemissionsteil (111) und einen den Lichtemissionsteil umgebenden Umfangsteil (112), wobei der Umfangsteil mindestens zwei einander zugewandte seitliche Abschnitte (112L) aufweist,
wobei das Lichtmodul erste Haltemittel (31) und zweite Haltemittel (32) aufweist, um jeweils die erste flächige Quelle (11) und die zweite flächige Quelle (12) so bezüglich einander in Position zu halten, dass die zweite flächige Quelle (12) die erste flächige Quelle (11) mindestens teilweise abdeckt, **dadurch gekennzeichnet, dass** die ersten Haltemittel (31) dazu angeordnet sind, die erste flächige Quelle (11) lediglich an den beiden seitlichen Abschnitten des Umfangsteils dieser Quelle zu halten, und dass das Modul eine erste Maske (113) umfasst, die zum Abdecken eines vorderen Abschnitts (112A) des Umfangsteils der ersten flächigen Quelle (11) angeordnet ist, und wobei die ersten Haltemittel (31) dazu angeordnet sind, die Maske integral mit den seitlichen Abschnitten der ersten flächigen Quelle (11) zu halten.

2. Modul (1) nach Anspruch 1, wobei die erste flächige Quelle (11) einen elektrischen Verbindungsteil neben dem Lichtemissionsteil aufweist und wobei die ersten und die zweiten Haltemittel dazu angeordnet sind, dass die zweite flächige Quelle (12) die erste flächige Quelle (11) an einem Abdeckbereich dieser ersten flächigen Quelle abdeckt, wobei der Abdeckbereich den elektrischen Verbindungsteil teilweise umfasst.

3. Modul (1) nach einem der Ansprüche 1 bis 2, wobei die erste flächige Quelle (11) eine organische Leuchtdiode ist.

4. Modul (1) nach einem der Ansprüche 1 bis 3, wobei eines der ersten Haltemittel (31) einen unteren Kontaktbereich (311), der dazu bestimmt ist, mit einer unteren Kontaktfläche (112I) eines der seitlichen Abschnitte (112L) in Kontakt zu kommen, und einen oberen Kontaktbereich (312) aufweist, der dazu bestimmt ist, mit einer oberen Kontaktfläche (112S) dieses seitlichen Abschnitts in Kontakt zu kommen, um die erste flächige Quelle (11) in Position zu halten.

5. Modul (1) nach Anspruch 4, wobei sich die obere Kontaktfläche (112S) über mindestens einen Hauptteil des seitlichen Abschnitts (112L) erstreckt.

6. Modul (1) nach Anspruch 5, wobei sich der obere Kontaktbereich (312) und die obere Kontaktfläche (112S) jeweils über eine gleiche Länge erstrecken, die wesentlich kleiner als die Länge des seitlichen Abschnitts (112L) ist.

7. Modul (1) nach Anspruch 6 in Kombination mit Anspruch 2, wobei der obere Kontaktbereich (312) und die obere Kontaktfläche (112S) jeweils über eine gleiche Länge erstrecken, die im Wesentlichen gleich der oder größer als die Länge zwischen einem vorderen Ende der ersten flächigen Quelle und einem vorderen Ende des Abdeckbereichs der ersten flächigen Quelle ist.

8. Modul (1) nach Anspruch 5, wobei sich der obere Kontaktbereich (312) und die obere Kontaktfläche (112S) jeweils über eine gleiche Länge erstrecken, die im Wesentlichen gleich der des seitlichen Abschnitts (112L) ist.

9. Modul (1) nach einem der Ansprüche 5 bis 8, wobei das erste Mittel (31) ferner einen zusätzlichen oberen Kontaktbereich (313) umfasst, der dazu bestimmt ist, mit einer oberen Kontaktfläche (113S) der ersten Maske (113) in Kontakt zu kommen.

10. Modul (1) nach einem der Ansprüche 5 bis 9, wobei das erste Mittel eine Nut (31) aufweist, die den unteren und den oberen Kontaktbereich (311, 312) umfasst.

11. Modul (1) nach einem der Ansprüche 5 bis 9, wobei das erste Mittel (31) eine Stütze (2) aufweist, die den unteren Kontaktbereich (311) und einen Rand umfasst, der mit der den oberen Kontaktbereich (312) umfassenden Stütze verbunden ist.

12. Modul (1) nach Anspruch 4, wobei die obere Kontaktfläche (112S) eine örtliche Fläche des seitlichen Abschnitts ist.

13. Modul (1) nach Anspruch 12, wobei das erste Mittel eine Stütze aufweist, die den unteren Kontaktbereich und mindestens einen Clip umfasst, der mit der den oberen Kontaktbereich umfassenden Stütze verbunden ist.

14. Modul (1) nach einem der Ansprüche 1 bis 13, wobei das Modul eine Stütze (2) umfasst, die dazu angeordnet ist, die erste und die zweite flächige Quelle (11, 12, 13, 14) zu stützen.

15. Modul (1) nach Anspruch 14, wobei die ersten Haltemittel (31) insbesondere durch Verschrauben oder Einrasten an der Stütze (2) befestigt sind.

16. Modul (1) nach Anspruch 14, wobei das erste Mittel (31) und die Stütze (2) einteilig ausgebildet sind.

17. Beleuchtungsvorrichtung des Inneren eines Fahrgastraums des Fahrzeugs mit einem Modul (1) nach einem der vorhergehenden Ansprüche.

## Claims

1. Light module (1) for a motor vehicle, comprising at least first and second surface light sources (11, 12, 13, 14), the first surface source (11) comprising:
- a light emission part (111) and a peripheral part (112) surrounding the light emission part, the peripheral part comprising at least two facing lateral portions (112L),
the light module comprising first holding means (31) and second holding means (32) for respectively holding the first surface source (11) and the second surface source (12) in position with respect to one another so that the second surface source (12) at least partially overlaps the first surface source (11), the module being **characterized in that** the first holding means (31) are arranged to hold the first surface source (11) only at the two lateral portions of the peripheral part of this source and **in that** the module comprises a first mask (113) arranged to mask a front portion (112A) of the peripheral part of the first surface source (11) and wherein the first holding means (31) are arranged to hold the mask integrally with the lateral portions of the first surface source (11).

2. Module (1) according to Claim 1, wherein the first surface source (11) comprises an electrical connection part adjacent to the light emission part and wherein the first and second holding means are arranged so that the second surface source (12) overlaps the first surface source (11) in a zone of overlap of this first surface source, said zone of overlap partially comprising the electrical connection part.

3. Module (1) according to one of Claims 1 and 2, wherein the first surface source (11) is an organic light-emitting diode.

4. Module (1) according to one of Claims 1 to 3, wherein one of the first holding means (31) comprises a bottom contact zone (311) intended to enter into contact with a bottom contact surface (1121) of one of the lateral portions (112L) and a top contact surface (312) intended to enter into contact with a top contact surface (112S) of this lateral portion to hold the first surface source (11) in position.

5. Module (1) according to Claim 4, wherein the top contact surface (112S) extends over at least a major part of said lateral portion (112L).

6. Module (1) according to Claim 5, wherein the top contact zone (312) and the top contact surface (112S) each extend over the same length substantially less than the length of said lateral portion (112L).

7. Module (1) according to Claim 6 in combination with Claim 2, wherein the top contact zone (312) and the top contact surface (112S) each extend over a same length that is substantially equal to or greater than the length between a front end of the first surface source and a front end of the zone of overlap of the first surface source.

8. Module (1) according to Claim 5, wherein the top contact zone (312) and the top contact surface (112S) each extend over the same length that is substantially equal to that of said lateral portion (112L).

9. Module (1) according to one of Claims 5 to 8, wherein the first means (31) further comprise an additional top contact zone (313) intended to enter into contact with a top contact surface (113S) of said first mask (113).

10. Module (1) according to one of Claims 5 to 9, wherein the first means comprises a groove (31) comprising the bottom and top contact zones (311, 312).

11. Module (1) according to one of Claims 5 to 9, wherein the first means (31) comprises a support (2) comprising the bottom contact zone (311) and a rim linked to the support comprising the top contact zone (312).

12. Module (1) according to Claim 4, wherein the top contact surface (112S) is a local surface of said lateral portion.

13. Module (1) according to Claim 12, wherein the first means comprises a support comprising the bottom contact zone and at least one clip linked to the support comprising the top contact zone.

14. Module (1) according to one of Claims 1 to 13, the module comprising a support (2) arranged to support the first and second surface sources (11, 12, 13, 14).

15. Module (1) according to Claim 14, wherein the first holding means (31) are fixed to the support (2), notably by screwing or snap-fitting.

16. Module (1) according to Claim 14, wherein the first means (31) and the support (2) are formed in a single piece.

17. Interior lighting device of a vehicle interior comprising a module (1) according to one of the preceding claims.
